# EUROPEAN PATENT APPLICATION

(11) **EP 4 199 158 A1**
(43) Date of publication of application: **21.06.2023**
(21) Application number: 21867200.4
(22) Date of filing: 14.09.2021
(51) Int. Cl.: H01M 4/66, H01M 4/13, H01M 10/052, H01M 4/02

(54) **NEGATIVE CURRENT COLLECTOR FOR ALL-SOLID-STATE BATTERY AND NEGATIVE ELECTRODE FOR ALL-SOLID-STATE BATTERY COMPRISING SAME**

(30) Priority: 14.09.2020 KR 20200117954
(71) Applicant: LG Energy Solution, Ltd., Seoul 07335 (KR)
(72) Inventor: CHO, Sung-Ju, Daejeon 34122 (KR); LEE, Jung-Pil, Daejeon 34122 (KR)
(74) Representative: Goddar, Heinz J.
(86) International application number: PCT/KR2021/012534
(87) International publication number: WO 2022/055335

(57) **Abstract**

The present disclosure relates to metal-carbon composite particles. The metal-carbon composite particles allow homogeneous introduction of metal particles to the surface of a current collector, and can induce homogeneous lithium electrodeposition between a coating layer including the metal-carbon composite particles and a conductive metal so that a uniform lithium metal plating film may be formed on the surface of a negative electrode current collector.

## Description

### TECHNICAL FIELD

The present application claims priority to Korean Patent Application No. 10-2020-0117954 filed on September 14, 2020 in the Republic of Korea. The present disclosure relates to a current collector for a negative electrode of a solid-state battery which shows high lithium metal electrodeposition efficiency, and a negative electrode for a solid-state battery including the same.

### BACKGROUND ART

There is an imminent need for developing a solid-state battery using a solid electrolyte in order to solve the safety problem of a secondary battery using a liquid electrolyte.

Since lithium is the lightest metal and has a low reduction potential (-3.04 V vs. SHE) and high theoretical capacity (3860 mAh/g), it has been studied as a next-generation negative electrode material. In the case of a lithium secondary battery using lithium metal as an electrode, an electrode having a small thickness is required to maximize the efficiency and energy density of the battery. However, there is a limitation in forming lithium foil having a predetermine level of thickness or less merely through a conventional physical pressing process for forming lithium foil. Meanwhile, a negative electrode has been manufactured by using a current collector alone without negative electrode active material (layer) in manufacturing a solid-state battery. In addition, the battery is operated by forming a lithium metal plating film through the lithium electrodeposition on the surface of the negative electrode current collector, while lithium ions are reduced during charge.

In general, a conductive metal, such as copper, is used as a negative electrode current collector, and there has been an attempt to carry out a method for increasing lithium electrodeposition efficiency by modifying (coating etc.) the metal surface. Such a method includes coating with a lithiophilic metal, such as Ag, or coating with a carbonaceous material, such as carbon black. In addition, a mixture containing silver and carbon has been attempted as a coating layer material. However, this cannot provide high performance in terms of resistance or charge/discharge efficiency. Therefore, there is a need for developing a negative electrode current collector or an active material-free negative electrode for a solid-state battery having improved electrochemical properties.

### DISCLOSURE

### Technical Problem

The present disclosure is designed to solve the problems of the related art, and therefore the present disclosure is directed to providing a current collector for a negative electrode which shows high lithium electrodeposition efficiency by coating the surface of a negative electrode current collector with metal-carbon composite particles, and a negative electrode for a solid-state battery including the current collector for a negative electrode. The present disclosure is also directed to providing a method for preparing the metal-carbon composite particles. It will be easily understood that the objects and advantages of the present disclosure may be realized by the means shown in the appended claims and combinations thereof.

### Technical Solution

According to an embodiment of the present disclosure, there is provided a negative electrode current collector for a solid-state battery, which includes an electroconductive metal foil, and a coating layer formed on the surface of the metal foil and including metal-carbon composite particles, wherein the metal-carbon composite particles include metal particles and carbon particles with at least one metal particle attached to at least one carbon particle, the composite particles have a particle diameter of 20 µm or less, and the content of metal in the composite particles is 50 parts by weight or less, based on 100 parts by weight of carbon.

According to the second embodiment of the present disclosure, there is provided the negative electrode current collector for a solid-state battery as defined in the first embodiment, wherein the metal particle includes at least one selected from the group consisting of Ni, Cu, Ag, Au, Pt, Al, Zn and Bi.

According to the third embodiment of the present disclosure, there is provided the negative electrode current collector for a solid-state battery as defined in the first or the second embodiment, wherein the carbon particle includes at least one selected from natural graphite, artificial graphite, hard carbon, soft carbon, carbon black, acetylene black, ketjen black, channel black, furnace black, lamp black, thermal black, carbon nanotubes, fullerene, carbon fibers and fluorocarbon.

According to the fourth embodiment of the present disclosure, there is provided a negative electrode for a solid-state battery, which includes the negative electrode current collector as defined in any one of the first to the third embodiments and does not include negative electrode active material, wherein lithium is electrodeposited to and detached from the surface of the metal foil during the operation of a battery.

According to the fifth embodiment of the present disclosure, there is provided the negative electrode for a solid-state battery as defined in the fourth embodiment, wherein lithium is electrodeposited between the metal foil and the coating layer.

According to the sixth embodiment of the present disclosure, there is provided the negative electrode current collector or negative electrode for a solid-state battery as defined in any one of the first to the fifth embodiments, wherein the metal particle and the carbon particle are attached to each other chemically, physically or both.

According to the seventh embodiment of the present disclosure, there is provided a solid-state battery, which includes the negative electrode as defined in the fourth or the fifth embodiment.

According to the eighth embodiment of the present disclosure, there is provided a method for preparing composite particles, including the steps of: preparing a reaction solution containing a metal salt and a carbonaceous material, and carrying out reaction in such a manner that metal particles may be grown on the surface of the carbonaceous material in the reaction solution.

According to the ninth embodiment of the present disclosure, there is provided the method for preparing composite particles as defined in the eighth embodiment, wherein the reaction solution has a solid content including the metal salt and the carbonaceous material, except a solvent, of 30 wt% or less.

According to the tenth embodiment of the present disclosure, there is provided the method for preparing composite particles as defined in the eighth or the ninth embodiment, wherein the metal salt is at least one of metal chloride, metal iodide, metal cyanide, metal bromide, metal sulfide, metal hydroxide, metal phosphite and metal chloride hydrate.

According to the eleventh embodiment of the present disclosure, there is provided the method for preparing composite particles as defined in any one of the eighth to the tenth embodiments, wherein the metal salt is chloride of at least one metal selected from Ni, Cu, Ag, Au, Pt, Al, Zn and Bi.

### Advantageous Effects

The metal-carbon composite particles according to the present disclosure allows homogeneous introduction of metal particles to the surface of a current collector. Therefore, it is possible to induce homogeneous lithium electrodeposition between a coating layer including the metal-carbon composite particles and a conductive metal, and to form a uniform lithium metal plating film on the surface of a negative electrode current collector.

In addition, the method for preparing metal-carbon composite particles allows formation of a composite of metal particles with a carbonaceous material having a fine size. As a result, when the resultant composite particles are introduced to a solid-state battery, lithium may be electrodeposited homogeneously on the surface of a current collector, as mentioned above.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing. Meanwhile, shapes, sizes, scales or proportions of some constitutional elements in the drawings may be exaggerated for the purpose of clearer description.
FIG. 1 is a schematic view illustrating how lithium is electrodeposited to a negative electrode current collector to form a plating film according to an embodiment of the present disclosure.
FIG. 2 to FIG. 4 illustrate the composite particles obtained according to Examples 1 to 3, respectively.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

Throughout the specification, the expression `a part includes an element' does not preclude the presence of any additional elements but means that the part may further include the other elements.

As used herein, the terms 'about', 'substantially', or the like, are used as meaning contiguous from or to the stated numerical value, when an acceptable preparation and material error unique to the stated meaning is suggested, and are used for the purpose of preventing an unconscientious invader from unduly using the stated disclosure including an accurate or absolute numerical value provided to help understanding of the present disclosure.

As used herein, the expression `A and/or B' means `A, B or both of them'.

The present disclosure relates to a negative electrode current collector, and a negative electrode for an electrochemical device including the negative electrode current collector. The electrochemical device may be a solid-state battery using a solid electrolyte as an electrolyte material. In addition, the solid-state battery may be a lithium-ion secondary battery.

According to the present disclosure, the negative electrode current collector includes a metal foil, and a coating layer formed on at least one surface of the metal foil and including metal-carbon composite particles.

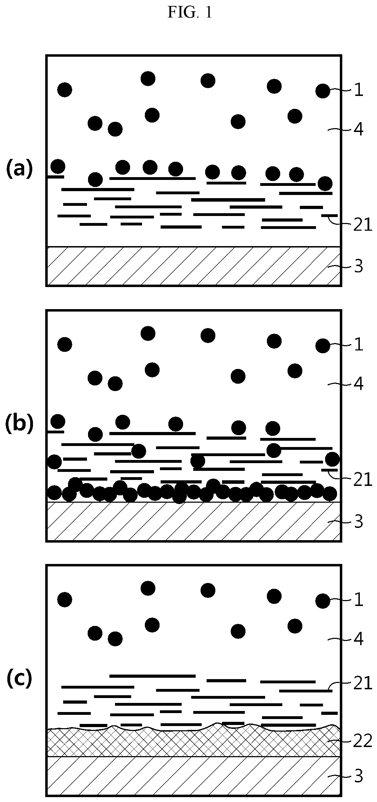

According to the present disclosure, the negative electrode current collector may be applied to a battery with no electrode active material coated thereon. In other words, the negative electrode current collector functions as an active material-free negative electrode in a solid-state battery, and lithium is electrodeposited on the surface of the metal foil during the charge of the battery so that electrochemical reactions may be carried out. FIG. 1 is a schematic view illustrating the negative electrode current collector and the process of lithium electrodeposition on the surface of the metal foil according to an embodiment of the present disclosure. Referring to FIG. 1, the negative electrode current collector includes a metal foil and a coating layer formed on the surface of the metal foil. In FIG. 1, reference numeral 21 represents aggregation of composite particles. As shown in FIG. 1, the coating layer may be a porous layer having pores, and lithium ions pass through the coating layer during charge, arrive at the surface of the metal foil and are electrodeposited to form a lithium metal layer 22. Herein, the term 'electrodeposition' may refer to deposition.

The metal foil may have a thickness of 3-500 µm. The metal foil is not particularly limited, as long as it has conductivity, while not causing any chemical change in the battery to which the current collector according to the present disclosure is applied. Particular examples of the negative electrode current collector include copper, stainless steel, aluminum, nickel, titanium, aluminum-cadmium alloy, or the like. According to an embodiment of the present disclosure, fine surface irregularities may be formed on the surface of the metal foil to increase the binding force with the coating layer or the plated lithium metal plating film electrodeposited to the metal foil. Meanwhile, according to an embodiment of the present disclosure, the metal foil may have various shapes, such as a film, a sheet, a foil, a net, a porous body, a foam or a non-woven web body.

According to the present disclosure, the coating layer may have a thickness of 5-50 µm, but is not limited thereto. According to an embodiment of the present disclosure, the metal-carbon composite particles may be present in an amount of 90 wt% or more, based on 100 wt% of the coating layer. For example, the composite particles may be present in an amount of 95 wt% or more, or 97 wt% or more, based on 100 wt% of the coating layer.

According to an embodiment of the present disclosure, in the metal-carbon composite particles, carbon particles and metal particles are attached to each other, or one type of particles are coated with the other type of particles. According to the present disclosure, the term 'attached/coated' may refer to carbon particles and metal particles bound physically and/or chemically to each other.

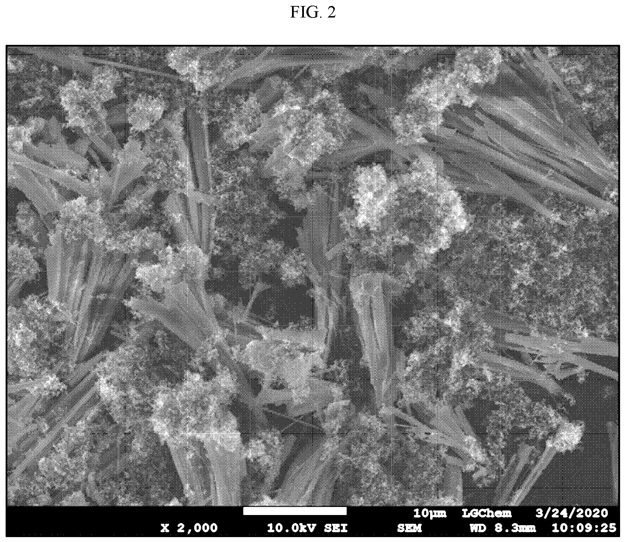

FIG. 2 to FIG. 4 are scanning electron microscopic (SEM) images illustrating the composite particles obtained according to Examples 1-3, respectively. Referring to FIG. 2 to FIG. 4, the metal-carbon composite particles include carbon particles and metal particles attached to each other.

According to an embodiment of the present disclosure, the metal-carbon composite particles may have a size (diameter) of 20 µm or less based on the longest diameter of the particles. Within the above-defined range, the composite particles may have a particle size of 10 µm or less, 5 µm or less, or 1 µm or less. Meanwhile, the composite particles may include a plurality of carbon particles. Meanwhile, the composite particles may include a plurality of metal particles. According to an embodiment of the present disclosure, the particle diameter may be determined by using the laser diffraction method.

According to an embodiment of the present disclosure, the carbon particle may include natural graphite, artificial graphite, hard carbon, soft carbon, carbon black, acetylene black, ketjen black, channel black, furnace black, lamp black, thermal black, carbon nanotubes, fullerene, carbon fibers and fluorocarbon.

According to the present disclosure, the metal particle may be a lithiophilic metal, and particular examples thereof include any one of Ni, Cu, Ag, Au, Pt, Al, Zn, Bi, or the like, or a combination of two or more of them. Introduction of such a lithiophilic metal facilitates formation of a stable and homogeneous lithium layer on the surface of a current collector.

Meanwhile, according to an embodiment of the present disclosure, the content of metal in the metal-carbon composite particles may be 1-50 parts by weight, based on 100 parts by weight of the carbonaceous material.

FIG. 1 illustrates the negative electrode current collector and the mechanism of forming a lithium metal plating film through the lithium electrodeposition on the negative electrode current collector according to an embodiment of the present disclosure. Referring to FIG. 1, a coating layer having a predetermined thickness is formed on the surface of the metal foil, and the coating layer includes the metal-carbon composite particles having the above-mentioned constitutional characteristics. According to an embodiment of the present disclosure, the coating layer may have an integral layered structure formed through the packing of the composite particles, and has a porous structure having pores derived from the interstitial volumes among the composite particles. The pores may be provided as lithium-ion channels during the charge/discharge of a battery. Therefore, the negative electrode current collector is provided to the manufacture of a battery in an electrode active material-free state, and lithium ions supplied from a positive electrode upon the initial charge in a battery activation step pass through the coating layer and are electrodeposited on the surface of the metal foil, thereby forming a plating film. Therefore, the negative electrode subjected to the activation step may include a lithium (Li) plating film electrodeposited thereon. The lithium plating film electrodeposited on the negative electrode allows continuous electrodeposition/release of lithium ions during the subsequent charge/discharge cycles of the lithium secondary battery, and thus contributes to the reversible capacity of the negative electrode.

According to an embodiment of the present disclosure, the metal-carbon composite particles may be prepared as follows.

First, a metal salt and a carbonaceous material are introduced to and dispersed in a solvent to prepare a reaction solution. The solvent may include an organic solvent, such as N-methyl pyrrolidone (NMP), dimethyl formamide (DMF), acetone or dimethyl acetamide, or C3 or lower alcohol, water, or the like. Such solvents may be used alone or in combination. However, the solvent is not limited to the above-mentioned examples, and is not particularly limited, as long as it does not affect the physical and/or chemical properties of the ingredients, such as the metal salt or the carbonaceous material. According to an embodiment of the present disclosure, the metal salt may be prepared as a solution (first solution) dissolved in water or alcohol. In addition, the carbonaceous material may be prepared as a dispersion (second solution) in an organic solvent. The prepared first solution is mixed with the second solution to prepare a reaction solution. According to an embodiment of the present disclosure, the reaction solution may have a solid content, except the solvent, controlled to 30 wt% or less, 20 wt% or less, 10 wt% or less, 5 wt% or less, or 3 wt% or less. Meanwhile, the solid content of the metal in the reaction solution may be controlled to a suitable range considering the size of the composite particles or the content of the metal particles in the composite particles.

The metal salt is provided as a salt of metal to be introduced to the composite particles, and particular examples thereof include at least one of metal chloride, metal iodide, metal cyanide, metal bromide, metal sulfide, metal hydroxide, metal phosphite and metal chloride hydrate. As mentioned above, the metal is a lithiophilic metal. According to an embodiment of the present disclosure, the metal may be silver (Ag). Particularly, the metal salt may be cyanide of silver, i.e. AgCN.

The dispersion is not limited to any particular method, and may be carried out by using a known mixing device, such as a paste mixer.

Next, the reaction solution is maintained at about 25°C or heated to a higher temperature to induce growth of metal particles on the surface of the carbonaceous material. The metal particles are grown on the surface of the carbonaceous material by introducing the metal to the surface of the carbonaceous material through the reduction of metal ions, and then repeatedly reducing the metal ions with the introduced metal as a seed. According to an embodiment of the present disclosure, when introducing silver (Ag) to the surface of carbon particles, AgCN diluted in ethanol may be used. The method for preparing metal-carbon composite particles according to the present disclosure is advantageous in that the metal particle size can be controlled finely. The method for controlling the metal particle size may include a method for controlling the amount of a metal salt or a method for controlling the amount of a solvent upon the mixing of the carbonaceous material with the metal salt to control the reaction rate. Then, when the metal particles are grown to a predetermined size, the reaction is quenched, and the product is filtered to remove the solution and to obtain metal-carbon composite particles. If necessary, the particles may be washed with water to remove the remaining carbonaceous material. In addition, after the product is filtered and washed with water, it may be dried to obtain metal-carbon composite particles finally.

Once the metal-carbon composite particles are obtained as described above, the particles may be coated on metal foil, such as nickel, copper or aluminum, to be used as a current collector to obtain a negative electrode current collector. The method for manufacturing a negative electrode current collector is not particularly limited, as long as it can form a coating layer containing the metal-carbon composite particles on the surface of the metal foil to a predetermined thickness. According to an embodiment of the present disclosure, the method for manufacturing a current collector may be exemplified as follows. First, a binder resin is introduced to a suitable organic solvent, such as acetone or NMP, to prepare a binder solution, and the composite particles are introduced thereto and mixed therewith to prepare slurry for forming a coating layer. Next, the slurry is coated on metal foil, followed by drying, to obtain a negative electrode current collector. The binder resin may include a fluorinated binder, such as PVDF, PVDF-HFP, PVDF-TFE or PVDF-TrFE, acrylic binder, or the like, but is not limited thereto. The binder solution may be controlled to a solid content, except the organic solvent, of 3-10 wt%. Meanwhile, the content of the composite particles and that of the binder resin in the slurry for forming a coating layer may be controlled to a weight ratio of 90:10-99:1. The coating may be carried out by using at least one method selected suitably from the known methods, such as doctor blade coating, dip coating, gravure coating and slot coating.

Meanwhile, the present disclosure also provides a secondary battery which includes a negative electrode including the negative electrode current collector, a solid electrolyte membrane and a positive electrode. According to an embodiment of the present disclosure, the negative electrode may include the negative electrode current collector according to the present disclosure alone, without any separate negative electrode active material layer, when it is provided to the manufacture of a secondary battery. Meanwhile, a lithium plating film is formed on the negative electrode through the electrodeposition of lithium ions after the initial charge/discharge, and the plating film may function as a negative electrode active material layer.

According to the present disclosure, the solid electrolyte membrane is interposed between the positive electrode and the negative electrode in a solid-state battery, and functions as an ion conducting channel, while functioning to insulate the positive electrode and the negative electrode electrically from each other. The solid electrolyte membrane may be prepared in the form of a sheet including a solid electrolyte material. If necessary, the solid electrolyte membrane may further include a binder resin for the purpose of its membrane shape-retaining stability.

The solid electrolyte material may include at least one selected from a sulfide-based solid electrolyte material, an oxide-based solid electrolyte material and a polymeric solid electrolyte material.

According to the present disclosure, the method for manufacturing a solid electrolyte membrane is not particularly limited, as long as it can provide a solid electrolyte membrane in the form of a sheet including a solid electrolyte material. For example, the solid electrolyte membrane may be obtained by introducing a solid electrolyte material to a solvent to prepare slurry for forming an electrolyte membrane and applying the slurry onto a release film, followed by drying. The release film is removed from the solid electrolyte membrane in the subsequent step, before the positive electrode is laminated with the solid electrolyte membrane.

The positive electrode includes a current collector and a positive electrode active material layer formed on the surface of the current collector. The active material layer may include a plurality of electrode active material particles and a solid electrolyte material. According to an embodiment of the present disclosure, the positive electrode may further include at least one of a conductive material and a binder resin, if necessary. In addition, the positive electrode may further include various additives in order to supplement or improve the electrochemical properties. According to the present disclosure, the method for manufacturing a positive electrode is not particularly limited, as long as it can provide a positive electrode in the form of a sheet including a positive electrode active material and a solid electrolyte. For example, the positive electrode may be obtained by introducing a positive electrode active material and a solid electrolyte material to a solvent to prepare slurry for forming a positive electrode, and applying the slurry to a current collector, followed by drying.

The positive electrode active material is not particularly limited, as long as it may be used as a positive electrode active material for a lithium-ion secondary battery. Non-limiting examples of the positive electrode active material may include any one selected from: layered compounds, such as lithium manganese composite oxide (LiMn₂O₄, LiMnO₂, etc.), lithium cobalt oxide (LiCoO₂) and lithium nickel oxide (LiNiO₂), or those compounds substituted with one or more transition metals; lithium manganese oxides such as those represented by the chemical formula of Li₁₊ₓMn₂₋ₓO₄ (wherein x is 0-0.33), LiMnO₃, LiMn₂O₃ and LiMnO₂; lithium copper oxide (Li₂CuO₂); vanadium oxides such as LiVsOs, LiV₃O₄, V₂O₅ or Cu₂V₂O₇; Ni-site type lithium nickel oxides represented by the chemical formula of LiNi₁₋ₓMₓO₂ (wherein M is Co, Mn, Al, Cu, Fe, Mg, B or Ga, and x is 0.01-0.3); lithium manganese composite oxides represented by the chemical formula of LiMn₂₋ₓMₓO₂ (wherein M is Co, Ni, Fe, Cr, Zn or Ta, and x is 0.01-0.1) or Li₂Mn₃MO₈ (wherein M is Fe, Co, Ni, Cu or Zn); LiMn₂O₄ in which Li is partially substituted with an alkaline earth metal ion; disulfide compounds; Fe₂(MoO₄)₃; or the like, or a mixture of two or more of them. According to the present disclosure, the positive electrode may include, as a solid electrolyte material, at least one of a polymeric solid electrolyte, an oxide-based solid electrolyte and a sulfide-based solid electrolyte.

According to an embodiment of the present disclosure, the solid-state battery may be obtained by stacking the positive electrode, the solid electrolyte membrane and the negative electrode successively, and carrying out pressurization so that the electrodes and the solid electrolyte membrane may accomplish close interlayer binding.

According to the present disclosure, the pressurization may be carried out by using any method, as long as the method ensures binding between each electrode and the solid electrolyte membrane and suitable porosity. According to an embodiment of the present disclosure, the pressurization may be carried out by using a method selected suitably from the known pressing methods, such as roll pressing, compression pressing, cold isotactic pressing (CIP), or the like, and is not limited to any particular method.

According to the present disclosure, the conductive material is added generally in an amount of 1-30 wt% based on the total weight of the mixture including the electrode active material in the electrode active material layer. Such a conductive material is not particularly limited, as long as it causes no chemical change in the corresponding battery and has conductivity. Particular examples of the conductive material include any one selected from: graphite, such as natural graphite or artificial graphite; carbon black, such as carbon black, acetylene black, ketjen black, channel black, furnace black, lamp black or thermal black; conductive fibers, such as carbon fibers or metallic fibers; metal powder, such as carbon fluoride, aluminum or nickel powder; conductive whisker, such as zinc oxide or potassium titanate; conductive metal oxide, such as titanium oxide; and conductive materials, such as polyphenylene derivatives, or a mixture of two or more of them.

According to the present disclosure, the binder resin is not particularly limited, as long as it is an ingredient which assists binding between the active material and the conductive material and binding to the current collector. Particular examples of the binder resin include polyvinylidene fluoride (PVDF), polyvinyl alcohol, carboxymethyl cellulose (CMC), starch, hydroxypropyl cellulose, regenerated cellulose, polyvinyl pyrrolidone, tetrafluoroethylene, polyethylene, polypropylene, ethylene-propylene-diene monomer (EPDM), sulfonated EPDM, styrene-butadiene rubber, fluoro-rubber, various copolymers thereof, or the like. In general, the binder resin may be added in an amount of 1-30 wt%, or 1-10 wt%, based on the total weight of the electrode layer.

Meanwhile, according to the present disclosure, each electrode active material layer may further include at least one additive, such as an oxidation stabilizing additive, a reduction stabilizing additive, a flame retardant, a heat stabilizer, an anti-fogging agent, or the like, if necessary.

According to the present disclosure, the sulfide-based solid electrolyte contains sulfur (S), has conductivity of metal ions that belong to Group1 or Group 2 in the Periodic Table, and may include Li-P-S glass or Li-P-S glass ceramic. Non-limiting examples of the sulfide-based solid electrolyte include at least one of Li₂S-P₂S₅, Li₂S-LiI-P₂S₅, Li₂S-LiI-LizO-PzSs, Li₂S-LiBr-P₂S₅, Li₂S-Li₂O-P₂S₅, Li₂S-Li₃PO₄-P₂S₅, Li₂S-P₂S₅-P₂O₅, Li₂S-P₂S₅-SiS₂, Li₂S-P₂S₅-SnS, Li₂S-P₂S₅-Al₂S₃, Li₂S-GeS₂, Li₂S-GeS₂-ZnS, or the like. However, the scope of the present disclosure is not limited thereto.

In addition, the oxide-based solid electrolyte contains oxygen (O) and has conductivity of metal ions that belong to Group1 or Group 2 in the Periodic Table. Non-limiting examples of the oxide-based solid electrolyte include at least one selected from LLTO compounds, Li₆La₂CaTa₂O₁₂, Li₆La₂ANb₂O₁₂ (wherein A is Ca or Sr), Li₂Nd₃TeSbO₁₂, Li₃BO_{2.5}N_{0.5}, Li₉SiAlO₈, LAGP compounds, LATP compounds, Li₁₊ₓTi₂₋ₓAlₓSi_{y}(PO₄)_{3-y} (wherein 0 ≤ x ≤ 1, 0 ≤ y ≤ 1), LiAlₓZr₂₋ₓ(PO₄)₃ (wherein 0 ≤ x ≤ 1, 0 ≤ y ≤ 1), LiTiₓZr₂₋ₓ(PO₄)₃ (wherein 0 ≤ x ≤ 1, 0 ≤ y ≤ 1), LISICON compounds, LIPON compounds, perovskite compounds, NASICON compounds and LLZO compounds. However, the scope of the present disclosure is not limited thereto.

With reference to the solid electrolyte material, in the case of the positive electrode, an electrolyte material having high oxidation stability may be used as a solid electrolyte. In addition, in the case of the negative electrode, an electrolyte material having high reduction stability may be used as a solid electrolyte. However, the scope of the present disclosure is not limited thereto. Since the solid electrolyte material mainly functions to transport lithium ions in each electrode, any material having high ion conductivity, such as 10⁻⁷ s/cm or higher, or 10⁻⁵ s/cm or higher, may be used with no particular limitation.

In addition, the present disclosure provides a secondary battery having the above-described constitutional characteristics. Further, the present disclosure provides a battery module which includes the secondary battery as a unit cell, a battery pack including the battery module, and a device including the battery pack as an electric power source. Particular examples of the device include, but are not limited to: power tools driven by the power of an electric motor; electric cars, including electric vehicles (EV), hybrid electric vehicles (HEV), plug-in hybrid electric vehicles (PHEV), or the like; electric two-wheeled vehicles, including E-bikes and E-scooters; electric golf carts; electric power storage systems; or the like.

Hereinafter, the present disclosure will be explained in detail with reference to Examples. However, the following Examples are illustrative purposes only, and the scope of the present disclosure is not limited thereto.

### 1. Examples

### (1) Preparation of Metal-Carbon Composite Particles

### Example 1

First, AgCN dissolved in ethanol was mixed with a carbonaceous material (Super C65) dispersed in NMP to prepare a reaction solution. The reaction solution had a solid content of 21 wt%, and the content of Ag was 33 parts by weight based on 100 parts by weight of the carbonaceous material. The reaction solution was allowed to stand at room temperature for a predetermined time so that silver particles might be grown on the surface of the carbonaceous material particles. After the completion of the reaction, the reaction solution was filtered to obtain powder of composite particles. When AgCN introduced to the reaction totally participated in the reaction and particles were not grown any longer, the reaction was quenched. FIG. 2 is a scanning electron microscopic (SEM) image illustrating the composite particles obtained from Example 1. Referring to FIG. 2, it is shown that composite particles are formed from rod-like silver particles attached to carbon particles.

### Example 2

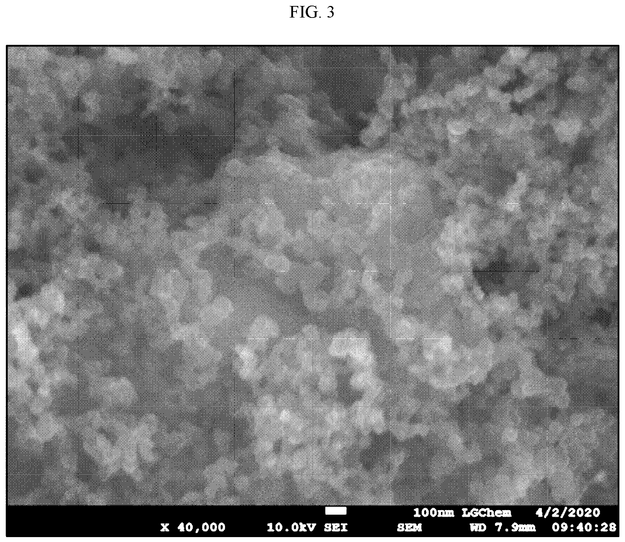

First, AgCN dissolved in ethanol was mixed with a carbonaceous material (Super C65) dispersed in NMP to prepare a reaction solution. The reaction solution had a solid content of 1.1 wt%, and the content of Ag was 33 wt% based on 100 parts by weight of the carbonaceous material. The reaction solution was allowed to stand at room temperature for a predetermined time so that silver particles might be grown on the surface of the carbonaceous material particles. After the completion of the reaction, the reaction solution was filtered to obtain powder of composite particles. When AgCN introduced to the reaction totally participated in the reaction and particles were not grown any longer, the reaction was quenched. FIG. 3 is a scanning electron microscopic (SEM) image illustrating the composite particles obtained from Example 2. Referring to FIG. 3, it is shown that composite particles are formed from silver particles attached to carbon particles.

### Example 3

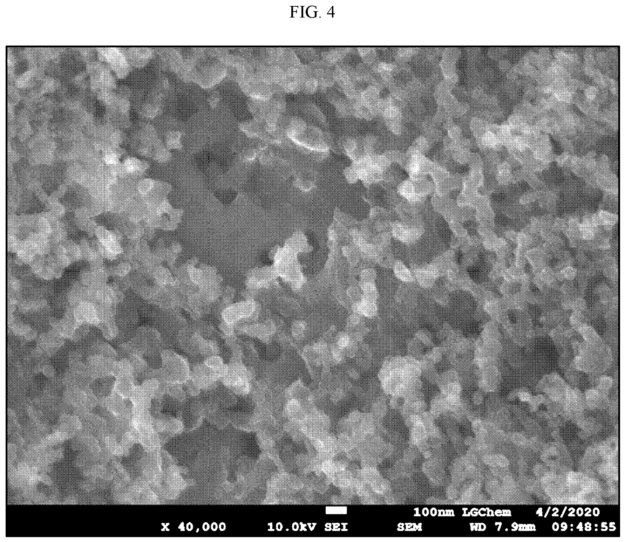

First, AgCN dissolved in ethanol was mixed with a carbonaceous material (Super C65) dispersed in NMP to prepare a reaction solution. The reaction solution had a solid content of 1.0 wt%, and the content of Ag was 11 wt% based on 100 parts by weight of the carbonaceous material. The reaction solution was allowed to stand at room temperature for a predetermined time so that silver particles might be grown on the surface of the carbonaceous material particles. After the completion of the reaction, the reaction solution was filtered to obtain powder of composite particles. When AgCN introduced to the reaction totally participated in the reaction and particles were not grown any longer, the reaction was quenched. FIG. 4 is a scanning electron microscopic (SEM) image illustrating the composite particles obtained from Example 3. Referring to FIG. 4, it is shown that composite particles are formed from silver particles attached to the carbon particles.

The content ratio of the ingredients used for preparing the composite particles according to each Example is shown in the following Table 1.

**[Table 1]**

| | AgCN solution | | Mixture 2 | | Solid content in reaction solution (%) | Ag/carbonaceous material (%) |
|---|---|---|---|---|---|---|
| | AgCN(g) | EtOH(g) | Super C65(g) | NMP(g) | | |
| Ex. 1 | 0.067 | 8.8 | 0.2 | 2 | 21 | 33 |
| Ex. 2 | 0.067 | 8.8 | 0.2 | 16 | 1.1 | 33 |
| Ex. 3 | 0.022 | 2.9 | 0.2 | 20 | 1.0 | 11 |

### (2) Manufacture of Current Collector

### 1) Examples 1-3

Polyvinylidene fluoride (PVDF) as a binder resin was introduced to N-methyl pyrrolidone (NMP) to prepare a binder solution. The binder solution was controlled to a concentration of binder resin of about 6 wt%. Meanwhile, the composite particles according to each of Examples 1-3 were introduced to NMP to obtain a dispersion. The binder solution was mixed with the dispersion by using a paste mixer to prepare slurry for forming a coating layer. Then, the resultant slurry for forming a coating layer was applied onto nickel foil by using a doctor blade with a gap of 100 µm, followed by drying, to obtain a negative electrode current collector having a coating layer with a thickness of 10 µm. The content ratio of the ingredients used for forming the coating layer according to each Example is shown in the following Table 2.

**[Table 2]**

| | Amount of composite particles (g) | Amount of binder solution (g) | Amount of NMP (g) | Ag/carbonaceous material (%) |
|---|---|---|---|---|
| Ex. 1 | 0.3 | 0.15 | 10 | 33 |
| Ex. 2 | 0.3 | 0.15 | 10 | 33 |
| Ex. 3 | 0.3 | 0.15 | 10 | 11 |

### 2. Comparative Examples 1 and 2

Polyvinylidene fluoride (PVDF) as a binder resin was introduced to N-methyl pyrrolidone (NMP) to prepare a binder solution. The binder solution was controlled to a concentration of binder resin of about 6 wt%. Meanwhile, Super C65 and Ag powder (particle diameter: about 50 nm) were introduced to NMP to obtain a dispersion. The binder solution was mixed with the dispersion by using a paste mixer to prepare slurry for forming a coating layer. Then, the resultant slurry for forming a coating layer was applied onto nickel foil by using a doctor blade with a gap of 100 µm, followed by drying, to obtain a negative electrode current collector having a coating layer with a thickness of 10 µm. The content ratio of the ingredients used for forming the coating layer according to each Comparative Example is shown in the following Table 3.

**[Table 3]**

| | Super C65(g) | Ag(g) | Amount of binder solution (g) | Amount of NMP (g) | Ag/carbonaceous material (%) |
|---|---|---|---|---|---|
| Comp. Ex. 1 | 0.2 | 0.067 | 0.14 | 10 | 33 |
| Comp. Ex. 2 | 0.2 | 0.02 | 0.11 | 10 | 10 |

### 3. Comparative Example 3

Ketjen black (Lion Specialty Chemicals, D50= 34 nm) was mixed with Li₂S-P₂S₅ (D50 = 0.5 µm) at a weight ratio of 2:1, heptane was introduced thereto, and the resultant mixture was mixed by using a homogenizer (SMT, UH-50) for 3 minutes to obtain slurry for forming a coating layer. Then, the resultant slurry for forming a coating layer was applied onto nickel foil by using a doctor blade with a gap of 100 µm, followed by drying, to obtain a negative electrode current collector having a coating layer with a thickness of 10 µm.

### 4. Manufacture of Battery

First, LiNi_{0.8}Co_{0.1}Mn_{0.1}O₂ as a positive electrode active material, Li₂S-P₂S₅ as a solid electrolyte, butadiene nitrile rubber (NBR) as a binder and vapor-grown carbon fibers (VGCF) as a conductive material were introduced to anisole at a weight ratio of 75.5:22.1:1.5:1 to prepare slurry (solid content 70 wt%) for forming a positive electrode active material layer. The slurry was applied to one surface of aluminum foil (thickness: about 10 µm) and dried at 60°C for 6 hours to prepare a positive electrode.

In addition, Li₂S-P₂S₅ as a solid electrolyte and butadiene nitrile rubber (NBR) as a binder were introduced to anisole at a weight ratio of 95:5 to prepare slurry (solid content 60 wt%) for forming a solid electrolyte membrane. The slurry was prepared through mixing in Thinkky mixer for 1 minute at a rate of 2000 rpm. The slurry was applied to one surface of a release sheet made of polyethylene terephthalate and dried overnight at room temperature under ambient pressure, and then the release sheet was removed to prepare a solid electrolyte membrane. The solid electrolyte membrane had a thickness of 50 µm.

Then, the positive electrode, the solid electrolyte membrane and each of the negative electrode current collectors (Examples 1-3 and Comparative Examples 1-3) were stacked successively, and pressurization was carried out under a pressure of 500 MPa for 5 minutes to obtain an electrode assembly for a secondary battery.

### 5. Comparison of Electrochemical Properties

Each of the cell stacks (electrode assemblies) obtained from using the current collectors of Examples 1-3 and Comparative Examples 1-3 was used to obtain a solid-state battery, and the solid-state battery was charged/discharged first and determined in terms of charge capacity, discharge capacity and initial efficiency according thereto. Each battery was charged to 4.25 V (0.01 C cutoff) at 0.05 C in a constant current (CC)-constant voltage (CV) mode, and discharged to 3 V at 0.05 C. The charge/discharge was carried out at 65°C. Meanwhile, AC impedance was measured by using an electrochemical impedance spectroscopic (EIS) analyzer (VMP3, Biologic science instrument) under the conditions of an amplitude of 10 mV and a scan range of 500 kHz to 20 MHz. The results are shown in the following Table 4. When comparing Example 1 with Comparative Example 1 using the same silver content, it can be seen that the battery including the negative electrode current collector according to the present disclosure shows higher electrochemical properties. In addition, when comparing Example 3 with Comparative Example 2 using the same silver content, it can be seen that the battery according to Example 3 shows higher electrochemical properties including a higher charge/discharge efficiency. Meanwhile, Comparative Example 3 shows a significantly low initial efficiency.

**[Table 4]**

| | AC impedance (ohm) | Charge capacity (mAh) | Discharge capacity (mAh) | Initial efficiency (%) |
|---|---|---|---|---|
| Ex. 1 | 14 | 28.5 | 26.2 | 92 |
| Ex. 2 | 12 | 27.8 | 26.6 | 92 |
| Ex. 3 | 14 | 25.0 | 22.3 | 89 |
| Comp. Ex. 1 | 15 | 32.1 | 28.6 | 89 |
| Comp. Ex. 2 | 14 | 27.8 | 24.2 | 87 |
| Comp. Ex. 3 | 18 | 26.9 | 20.2 | 75 |

### [Description of Main Elements]

1: Lithium ion
4: Battery inner part (filled with electrolyte, etc.)
21: Aggregated composite particles
3: Metal foil
22: Lithium metal layer

## Claims

1. A negative electrode current collector for a solid-state battery, which comprises an electroconductive metal foil, and a coating layer formed on the surface of the metal foil and comprising metal-carbon composite particles,
wherein the metal-carbon composite particles comprise metal particles and carbon particles with at least one metal particle attached to at least one carbon particle, the composite particles have a particle diameter of 20 µm or less, and the content of metal in the composite particles is 50 parts by weight or less based on 100 parts by weight of carbon.

2. The negative electrode current collector for a solid-state battery according to claim 1, wherein the metal particle comprises at least one selected from the group consisting of Ni, Cu, Ag, Au, Pt, Al, Zn and Bi.

3. The negative electrode current collector for a solid-state battery according to claim 1, wherein the carbon particle comprises at least one selected from natural graphite, artificial graphite, hard carbon, soft carbon, carbon black, acetylene black, ketjen black, channel black, furnace black, lamp black, thermal black, carbon nanotubes, fullerene, carbon fibers and fluorocarbon.

4. A negative electrode for a solid-state battery which comprises the negative electrode current collector as defined in claim 1 and comprises no negative electrode active material, wherein lithium is electrodeposited to and detached from the surface of the metal foil during the operation of a battery.

5. The negative electrode for a solid-state battery according to claim 4, wherein lithium is electrodeposited between the metal foil and the coating layer.

6. The negative electrode for a solid-state battery according to claim 1, wherein the metal particle and the carbon particle are attached to each other chemically, physically or both.

7. A solid-state battery comprising the negative electrode as defined in claim 5.

8. A method for preparing composite particles, comprising the steps of:
preparing a reaction solution containing a metal salt and a carbonaceous material, and
carrying out reaction in such a manner that metal particles may be grown on the surface of the carbonaceous material in the reaction solution.

9. The method for preparing composite particles according to claim 8, wherein the reaction solution has a solid content including the metal salt and the carbonaceous material, except a solvent, of 30 wt% or less.

10. The method for preparing composite particles according to claim 8, wherein the metal salt is at least one of metal chloride, metal iodide, metal cyanide, metal bromide, metal sulfide, metal hydroxide, metal phosphite and metal chloride hydrate.

11. The method for preparing composite particles according to claim 8, wherein the metal salt is chloride of at least one metal selected from Ni, Cu, Ag, Au, Pt, Al, Zn and Bi.
